Europäisches Patentamt

European Patent Office

Office européen des brevets

(11) Publication number: **0 348 579**

**A1**

# EUROPEAN PATENT APPLICATION

(21) Application number: 88500064.6

(22) Date of filing: 27.06.88

(51) Int. Cl.⁴: **G07G 1/00** , **G09F 9/00** , **G07F 7/06**

(43) Date of publication of application:
**03.01.90 Bulletin 90/01**

(84) Designated Contracting States:
**AT BE CH DE ES FR GB GR IT LI LU NL SE**

(71) Applicant: **MOSTOLES INDUSTRIAL, S.A.**
**Granada, s/n**
**Mostoles (Madrid)(ES)**

(72) Inventor: **Pavon Llorente, Pablo Avda. de**
**Villaviciosa, 131-C**
**Urbanizacion el Castillo**
**Villaviciosa de Odon Madrid(ES)**

(74) Representative: **Toro Gordillo, Ignacio Maria**
**Viriato, 56**
**E-28010 Madrid(ES)**

(54) **Informative system of characteristics of products in self-service regime selling shops.**

(57) This system consists in the disposition, in correspondence with each area of shelf corresponding to a certain product, of an electronic display capable of receiving information from a central unit, common for all the shop, preferably from a computer and with the cooperation of an emitter, in order that the transmission of data be wireless. With this same purpose, each electronic display is self-sufficient from the energetic point of view, attaining the necessary energy for its circuit, by own captation.

# INFORMATIVE SYSTEM OF CHARACTERISTICS OF PRODUCTS IN SELF-SERVICE REGIME SELLING SHOPS

## OBJECT OF THE INVENTION

The present invention refers to a new system for the supply of information to the customers in selling shops with a self-service regime, of the essential characteristics, such as denomination, price, reference, etc. of the different products which are offered to it about corresponding shelves or stacks from which the customer takes directly the products that he goes on selecting.

## ANTECEDENTS OF THE INVENTION

As well known, there exists on each time more generalized trend to the marketing of products of consumption in selling premises with a self-service regime, and more concretely in macro-premises, where not only it is offered a big quantity of different products, but also of different brands for each of them.

At a shop of this type, shelves are used, generally accessible by both sides, which adequately distributed in the corresponding premise, define halls that facilitate the visualization and access to the different types of products, which must be duly classified and must show to the consumer its essential characteristics, such as the denomination of said product, its price, its reference number and any other characteristic considered as convenient.

As previously said, the consumers make their purchases under a self-service regime, generally with the cooperation of carriages, in which they deposit the selected products, so that the control of same is made at the end of the purchasing phase, concretely at the time of getting to the cash register.

The philosophy of this type of shops is based on an ample offer and some assayed prices, in order to obtain the adequate level of benefits, not on basis of some high percentual margins with respect to the level of costs, but on a massive sale, without said massive sale constituting in turn an important factor in the very marketing costs. This is attained by the very self-service regime, which eliminates the classical "shop keepers" that guided the consumers about the products to be elected, and in the use at the exit cash registers of the shop of systems of scanner readers, which allow a rapid control of the products to be accounted for, without the need of the classical labeling and using to that purpose the well known "bar code".

However, and due to the very nature of the self-service, it is necessary that each type and brand of product, besides being located on a shelf directly visible and easily reachable by the consumer, shows him its essential characteristics, that is, its denomination, its price and any other considered as necessary or convenient.

Therefor, it is used at present indicators of characteristics, normally materialized on a cardboard bearing the information necessary and fastened to the corresponding stand. The most commonly used solution in this sense consists in the use of special profiles, solidarized to the front edge of each of the shelves, where the said cardboards are inserted by "slide" duly protected, generally by a plastic and transparent cover.

In accordance with this solution, it is obvious that every time a replacement of the products offered at the shop is made, or every time such products suffer a modification in their price or in any other characteristic, it is necessary the replacement of the signalling elements, with the consequent investment which this means, most of all if you take into account that in macro-shops as the ones previously cited, the number of references of product may reach and even exceed the 25.000 units.

This problem has been tried to be solved by means of special "price-holders" that may be standardized and which instead of their global substitution, they may allow exclusively the modification of their data of characteristics, but evidently that does not constitute a satisfactory solution, as the task of exchange continues being extraordinarily important.

## DESCRIPTION OF THE INVENTION

The informative system of characteristics of products for shelves for sale under the self-service regime, that the invention proposes, solves this problem at full satisfaction, allowing to control, keep, update or substitute such characteristics of identification of each of the products, without the need of an "in situ" handling on them, and more concretely, from a governing central, located at any adequate place and from which all these steps may be carried out with the use of a computer.

Therefor, and in a more concrete mode, said system is materialized in the disposition, on each spot of each of the shelves intended to the location of a certain type of products, of an electronic display provided with sufficient digits and letters as to express the denomination and price of the product, its code, be it a numerical reference or the classical bar code, or any other characteristic.

The multiple electronic displays of the shop will be duly related with a central unit, from which the data of each of them may be controlled and modified.

As from this basic structuration, given that the shelves can sometimes change their position and much more frequently inside each shelf, the stands or racks will change their level, to adequate their distancing to the size or quantity of products, the feeding of data from the central unit must be wireless, not only if this feeding is carried out at the expense of a computer, but also by any other means, being it used in this last case a remote control.

For the same reasons, the energetic feeding of the displays must be, whenever possible, by own captation, at the expense of the environmen tal ilumination, avoiding as much as possible the existence of electro-conducting wires, not only for the supply of information but also for the electric feeding, in the sine of the shop.

Therefore, and in accordance with the system exposed, at any selling shop with a self-service regime and no matter how big it is the range of products offered by same, the classical identification price-holders of the characteristics of each of the said products, may be substituted by the displays of the invention, being all the latter controlled remotely, from the cited central unit, and at any certain time it may be varied the information of each of them, just by acting to this regard on the keyboard of the computer or actuating on the corresponding remote control.

## DESCRIPTION OF THE DRAWINGS

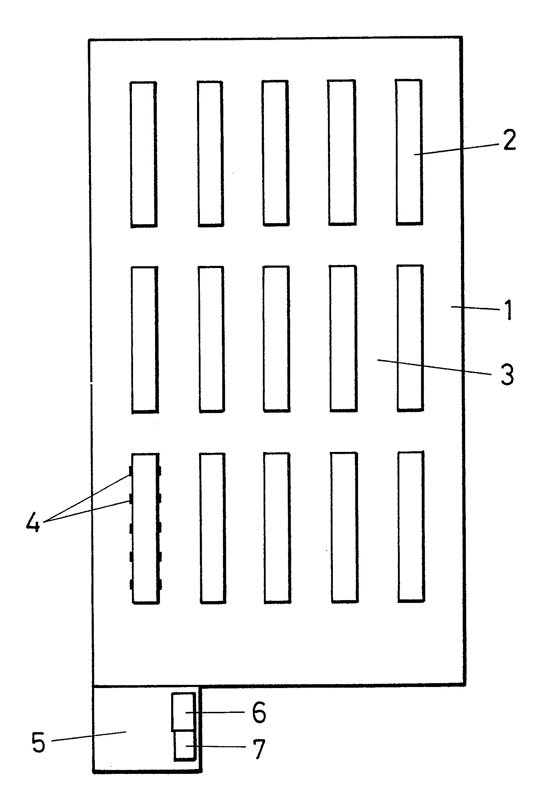

To complement the description that is being made and in order to help to a better understanding of the characteristics of the invention, it is enclosed to the present specification, as an integral part of same, a unique sheet of drawings in which, with an illustrative and non limitative character, and in its only figure, it has been represented schematically, a selling shop with a self-service regime, provided with the informative system of characteristics of products object of the present invention.

## PREFERENT EMBODIMENT OF THE INVENTION

The invention is applicable to any type of shop 1 in which are established a plurality of shelves 2 for exposition of the multiple and different products, easily accessible for the consumer through the also multiple halls 3, the said products remaining duly classified in the context of the shelves 2, occupying specific areas of same.

Well, the system preconized is based in the disposition, in correspondence with each area, of a shelf for location of a certain product, of an electronic display 4 provided with sufficient digits and letters as to express the characteristics of the product in question and with a size in their characters so as the information results easily visible by the purchaser.

The multiple displays 4 established in the different shelves 2 of the shop 1, are controlled from a central unit 5, where preferably it will be established a central computer 6 and an emitter 7, with or without a data receiver, so that the transfer of information from the computer 6 to the displays 4 be wireless, being it avoided in this way the profuse wires which otherwise would be necessary to set out throughout the shop 1. Within this same line of structural simplification and as previously said, each display 4 will be provided with means of energetic self-feeding, as for instance, photovoltaic cells that are capable of transforming into electric energy, the luminic environmental energy of the shop.

Notwithstanding the system may lack the cited central computer 6, in which case the transmission of information to each of the displays 4 will be made by means of a remote control.

In any case, it is obtained, in accordance with the fundamental objective of the invention, that the information supplied by said displays 4 may be controlled and modified in a rapid mode, as well as simple and efficient, from the central drive unit 5 with the consequent simplification of costs, on which it refers to the maintenance of the information of characteristics for the different products in the sine of the shop.

It is not considered as necessary to make more extensive this description so that any expert in the art may understand the scope of the invention and the advantages derived from same.

The materials, shape, size and disposition of the elements will be susceptible of variation, provided it does not mean an alteration to the essentiality of the invention.

The terms under which this specification has been described should always be taken in a broad and non limitative sense.

## Claims

.1.- Informative system of characteristics of products in selling shops under self-service regime, essentially characterized in that it consists in the disposition, in correspondence with each area of location of a certain product in the context of the shop, of an electronic display provided with sufficient digits and letters as to express the denomination and price of the product, as well as optionally its code, not only if it is a numerical reference but if the classical bar code, having it been provided that all these electronic displays be controlled from a central unit and preferably at the expense of the information stored in a computer.

2.- Informative system of characteristics of products in selling shops under self-service regime, as per the 1st claim, characterized in that an emitter cooperates with the computer, with or without a data receiver, in order that the transmission of the latter be wireless, having it been provided that, when the data are not generated by a computer, the transmission of same be made with a remote control.

3.- Informative system of characteristics of products in selling shops under self-service regime, as per the previous claims, characterized in that each electronic display is self-sufficient from the energetic point of view, having available to that purpose photovoltaic cells or any other type of element capable of transforming the luminic environmental energy into electric energy for the feeding of the circuit of said display.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 002 886 (SUNDELIN)<br>* Abstract; figures 1-4; column 1, line 1 - column 3, line 68; claims 1-12 * | 1-3 | G 07 G    1/00<br>G 09 F    9/00<br>G 07 F    7/06 |
| E | WO-A-8 806 773 (ORDONEZ)<br>* Whole document * | 1-3 | |
| A | US-A-4 500 880 (GOMERSALL et al.)<br>* Abstract; figures 1-6; column 1, line 1 - column 5, line 37; claims 1-12 * | 1-3 | |
| A | GB-A-2 164 777 (TELEPANE, INC.)<br>* Abstract; figure 1; page 1, lines 1-70; page 3, lines 5-113; claims 1-7 * | 1,2 | |
| A | GB-A- 952 033 (SIEMENS & HALSKE)<br>* Claims 1-15; figures 1-3 * | 1,3 | |
| A | US-A-4 521 677 (SARWIN)<br>* Whole document * | 1 | |
| A | GB-A-2 146 787 (THE VICTORIA UNIVERSITY OF MANCHESTER)<br>* Abstract; claim 1 * | 1 | TECHNICAL FIELDS SEARCHED (Int. Cl.4)<br><br>G 07 F<br>G 09 F<br>G 06 F<br>A 47 F<br>G 07 G |
| A | FR-A-2 604 315 (STEVENS et al.)<br>* Whole document * | 3 | |

The present search report has been drawn up for all claims

| Place of search | Date of completion of the search | Examiner |
|---|---|---|
| THE HAGUE | 13-02-1989 | GUIVOL,O. |